# EUROPÄISCHE PATENTSCHRIFT

(11) **EP 4 092 255 B1**
(45) Veröffentlichungstag und Bekanntmachung des Hinweises auf die Patenterteilung: **26.06.2024**
(21) Anmeldenummer: 22162262.4
(22) Anmeldetag: 15.03.2022
(51) Int. Cl.: F01N 3/021, F01N 3/10, F01N 9/00, F02B 37/10, F02B 37/18, F02B 37/24, F02B 39/10

(54) **BETRIEB EINER BRENNKRAFTMASCHINE MIT EINEM ELEKTRISCHEN FRISCHGASVERDICHTER UND MIT EINER ABGASTURBINE MIT BYPASSLEITUNG UND VTG**
OPERATION OF A COMBUSTION ENGINE WITH AN ELECTRIC FRESH GAS COMPRESSOR AND WITH AN EXHAUST GAS TURBINE WITH BYPASS LINE AND VTG
FONCTIONNEMENT D'UN MOTEUR À COMBUSTION INTERNE DOTÉ D'UN COMPRESSEUR ÉLECTRIQUE DE GAZ FRAIS ET D'UNE TURBINE À GAZ D'ÉCHAPPEMENT POURVU DE CONDUITE DE DÉRIVATION ET DE TURBINE À GÉOMÉTRIE VARIABLE

(30) Priorität: 20.05.2021 DE 102021205167
(43) Veröffentlichungstag der Anmeldung: 23.11.2022
(73) Patentinhaber: VOLKSWAGEN AG, 38440 Wolfsburg (DE)
(72) Erfinder: SIPPEL, Simon, 38170 Kneitlingen (DE)

(56) Entgegenhaltungen:
- DE-A1-102020 006 467
- US-A1- 2020 131 981
- US-A1- 2020 224 614

## Beschreibung

Die Erfindung betrifft ein Verfahren zum Betreiben einer Brennkraftmaschine, wobei eine Abgasnachbehandlungskomponente der Brennkraftmaschine eine Betriebstemperatur aufweist, die unterhalb einer Solltemperatur liegt.

Um möglichst geringe Schadstoffemissionen einer Brennkraftmaschine zu realisieren, sollten die in einen Abgasstrang der Brennkraftmaschine integrierten Abgasnachbehandlungskomponenten einer Abgasnachbehandlungseinrichtung möglichst stets Betriebstemperaturen aufweisen, die oberhalb der jeweiligen Anspringtemperaturen (auch Light-off-Temperaturen genannt) liegen, ab denen von einer ausreichenden Wirksamkeit hinsichtlich der jeweils vorgesehenen Abgasnachbehandlung ausgegangen werden kann. Nach einem Kaltstart der Brennkraftmaschine, bei dem die Abgasnachbehandlungskomponenten Betriebstemperaturen aufweisen, die deutlich unterhalb der jeweiligen Anspringtemperaturen liegen, sollten die Betriebstemperaturen zumindest einiger der Abgasnachbehandlungskomponenten möglichst schnell die jeweilige Anspringtemperatur erreichen. Um dies zu gewährleisten ist es bekannt, einzelne Abgasnachbehandlungskomponenten aktiv zu beheizen. Dies ist zum einen mittels hierfür vorgesehener Heizvorrichtungen, die beispielsweise elektrische Heizelemente umfassen oder als Brenner ausgebildet sein können, möglich. Weiterhin können sogenannte innermotorische Maßnahmen umgesetzt werden, die darauf abzielen, durch einen gezielten Betrieb des Verbrennungsmotors mit einem relativ schlechten Wirkungsgrad relativ heißes Abgas zu erzeugen, so dass über das Abgas eine relativ schnelle Erwärmung der Abgasnachbehandlungskomponenten erreicht werden kann.

Die DE 10 2019 200 418 A1 offenbart, die im Abgas stromabwärts einer Abgasturbine verbleibende Energiemenge mittels einer auf einen Abgasturbolader einer Brennkraftmaschine einwirkenden und wahlweise als Elektromotor oder als Generator arbeitenden Elektromaschine zu beeinflussen. Ein dazu vergleichbares Verfahren ist auch in der US 2006/0236692 A1 offenbart.

Die DE 10 2018 117 913 A1 beschreibt ein Verfahren zur Regeneration eines Partikelfilters einer Brennkraftmaschine, wobei über ein Gebläse zusätzliche Luft in das Abgas eingebracht und zusätzlicher Kraftstoff über eine Einspritzvorrichtung in den Abgasstrang der Brennkraftmaschine eingespritzt wird, um durch eine Oxidation des Kraftstoffs mit Sauerstoff der Luft die Temperatur des Abgases zu erhöhen.

Ein Abgassystem für ein Kraftfahrzeug gemäß der DE 10 2019 102 013 A1 umfasst einen Abgaskrümmer, eine stromabwärts an den Abgaskrümmer angeschlossene Abgasturbine eines Abgasturboladers und eine stromabwärts an der Abgasturbine angeschlossene Abgasnachbehandlungseinrichtung, wobei der Abgasturbolader einen mit Hilfe eines Wastegateventils betätigbaren Bypasskanal zur Ladedruckregelung des Abgasturboladers aufweist. Weiterhin ist eine mit dem Abgaskrümmer und mit der Abgasnachbehandlungseinrichtung verbundene und mit Hilfe eines Kurzschlussventils betätigbare Kurzschlussleitung vorgesehen. Durch den geringeren Wärmesenkeneffekt der Kurzschlussleitung im Vergleich zu dem Abgasturbolader kann die Abgasnachbehandlungseinrichtung schneller auf ihre Anspringtemperatur aufgeheizt werden, wenn Abgas bedarfsweise über die Kurzschlussleitung geführt wird und damit die Abgasturbine nicht durchströmt.

Die US 2020/0131981 A1 offenbart ein Verfahren zum Betreiben einer Brennkraftmaschine, die einen Verbrennungsmotor, einen Frischgasstrang, in den ein Frischgasverdichter integriert ist, wobei der Frischgasverdichter mittels eines Elektromotors antreibbar ist, und einen Abgasstrang, in den eine Abgasturbine, die eine variable Turbinengeometrie (VTG) aufweist, eine Bypassleitung mit Bypassventil zur bedarfsweisen Umgehung der Abgasturbine, sowie, stromab der Abgasturbine und der Bypassleitung, eine Abgasnachbehandlungskomponente integriert sind, umfasst, wobei dann, wenn im Betrieb des Verbrennungsmotors eine Betriebstemperatur der Abgasnachbehandlungskomponente unterhalb einer Solltemperatur liegt, die Bypassleitung freigegeben, der Frischgasverdichter mittels des Elektromotors angetrieben und die VTG in eine vollständig geschlossene Stellung gestellt wird. Ein dazu ähnliches Verfahren ist in der US 2020/0224614 A1 offenbart.

Der Erfindung liegt die Aufgabe zugrunde, ein möglichst vorteilhaftes Aufheizen einer Abgasnachbehandlungskomponente einer Brennkraftmaschine auf eine Solltemperatur, insbesondere nach einem Kaltstart, zu erreichen

Diese Aufgabe wird durch ein Verfahren zum Betreiben einer Brennkraftmaschine gemäß dem Patentanspruch 1 gelöst. Vorteilhafte Ausführungsformen des erfindungsgemäßen Verfahrens sind Gegenstände der weiteren Patentansprüche und ergeben sich aus der nachfolgenden Beschreibung der Erfindung.

Erfindungsgemäß ist ein Verfahren zum Betreiben einer Brennkraftmaschine, die einen Verbrennungsmotor, einen Frischgasstrang und einen Abgasstrang umfasst, vorgesehen. In den Frischgasstrang ist zumindest ein Frischgasverdichter integriert, wobei der Frischgasverdichter mittels eines Elektromotors antreibbar ist. In den Abgasstrang sind zumindest eine Abgasturbine, die eine variable Turbinengeometrie (VTG) aufweist, eine Bypassleitung mit Bypassventil zur bedarfsweisen Umgehung der Abgasturbine, sowie, stromab der Abgasturbine und der Bypassleitung, zumindest eine Abgasnachbehandlungskomponente integriert. Der Frischgasverdichter und die Abgasturbine sind mechanisch entkoppelt. Wenn im Betrieb des Verbrennungsmotors eine Betriebstemperatur der Abgasnachbehandlungskomponente unterhalb einer Solltemperatur liegt, wird zumindest zeitweise die Bypassleitung (durch ein zumindest teilweises und vorzugsweise vollständiges Öffnen des Bypassventils) freigegeben. Weiterhin wird dann der Frischgasverdichter mittels des Elektromotors angetrieben und die VTG relativ weitgehend, insbesondere in eine zu mindestens 50% oder mindestens 80% oder mindestens 90%, jedoch kleiner als 100% geschlossene Stellung gestellt (und in der entsprechenden Verschlussstellung oder dem vorgesehenen Verschlussbereich gehalten).

Zur Realisierung einer VTG umfasst eine Abgasturbine eine Vorrichtung, mittels der ein Strömungsquerschnitt, über den Abgas zu einem Turbinenlaufrad der Abgasturbine geführt werden kann, hinsichtlich der Wirksamkeit veränderbar ist. Dazu kann zumindest die Größe des freien Strömungsquerschnitts und vorzugsweise auch der Winkel der Anströmung von Schaufeln des Turbinenlaufrads veränderbar sein. Je weiter geschlossen die VTG ist, desto kleiner ist auch der freie Strömungsquerschnitt zur Anströmung des Turbinenlaufrads. Die prozentuale Angabe der Schließstellung kann sich demnach auf das Verhältnis des in der jeweiligen Schließstellung der VTG noch vorliegenden freien Strömungsquerschnitts im Vergleich zu dem maximalen freien Strömungsquerschnitt (bei vollständig geöffneter beziehungsweise zu 0% geschlossener Stellung) beziehen. Alternativ kann sich die prozentuale Angabe der Schließstellung auf die Stärke einer Ansteuerung eines Aktors, mittels der die VTG verstellt werden kann, beziehen, wobei diese Ansteuerung vorzugsweise mittels Pulsweitenmodulation (PWM) erfolgt.

Das erfindungsgemäße Verfahren zielt darauf ab, ein möglichst schnelles Aufheizen der Abgasnachbehandlungskomponente bis zumindest zum Erreichen der Solltemperatur zu realisieren, indem von dem Verbrennungsmotor ausgestoßenes Abgas zumindest teilweise und vorzugsweise möglichst vollständig über die Bypassleitung und damit nicht über die Abgasturbine geführt wird. Die zumindest teilweise und vorzugsweise weittgehend geschlossene VTG der Abgasturbine stellt dabei sicher, dass der Widerstand für das Abgas zur Durchströmung der Abgasturbine möglichst hoch ist, so dass das Abgas möglichst weitgehend den widerstandsärmeren Weg über die Bypassleitung wählt. Durch ein Führen von Abgas über die Bypassleitung kann erreicht werden, dass dieses Abgas bei der Durchströmung der Abgasnachbehandlungskomponente noch eine möglichst hohe Temperatur aufweist. Dabei wird nicht nur eine Abkühlung dieses Abgases, die infolge einer Entspannung in der Abgasturbine auftreten würde, vermieden, sondern auch eine Abkühlung, die daraus resultiert, dass die Abgasturbine, die üblicherweise eine erhebliche thermische Masse aufweist, von dem Abgas erwärmt wird. Im Gegensatz dazu kann die Bypassleitung eine deutlich kleinere thermische Masse aufweisen, so dass die Abkühlung des Abgases beim Durchströmen der Bypassleitung entsprechend gering gehalten werden kann.

Wenn Abgas erfindungsgemäß temporär an der Abgasturbine vorbei geleitet wird, wird von der Abgasturbine nur wenig oder nahezu keine Antriebsleistung bereitgestellt, die für einen direkten oder indirekten Antrieb des Frischgasverdichters genutzt werden könnte. Vor diesem Hintergrund umfasst eine erfindungsgemäß betriebene Brennkraftmaschine auch einen Elektromotor zum Antreiben des Frischgasverdichters, so dass auch dann eine ausreichende Verdichtung von Frischgas, das dem Verbrennungsmotor zuzuführen ist, erreicht werden kann, wenn das Abgas temporär über die Bypassleitung und damit an der Abgasturbine vorbei geleitet wird.

Der Frischgasverdichter und die Abgasturbine können mechanisch entkoppelt sein, indem der Frischgasverdichter ausschließlich mittels des Elektromotors antreibbar ist, während die Abgasturbine mit einer zumindest auch als Generator betreibbaren Elektromaschine und/oder mit einem anderen Frischgasverdichter mechanisch gekoppelt ist. Die elektrische Leistung zum Antrieb des dem Frischgasverdichter zugeordneten Elektromotors kann dann durch die der Abgasturbine zugeordnete Elektromaschine und/oder durch eine mit dem Verbrennungsmotor mechanisch gekoppelte Elektromaschine bereitgestellt werden, wobei auch eine Zwischenspeicherung von elektrischer Energie in einer Speichervorrichtung, die in eine elektrische Verbindung zwischen der/den Elektromaschine(n) und dem Elektromotor eingebunden ist, vorgesehen sein kann.

Indem die VTG bei dem erfindungsgemäßen Betrieb einer Brennkraftmaschine nicht in die 100% geschlossene beziehungsweise in eine kleiner als 100% geschlossene Stellung gestellt wird, wenn die Bypassleitung freigegeben wird, kann gewährleistet werden, dass die Abgasturbine geringfügig aber dauerhaft von einem relativ kleinen Massenstrom des Abgases, der diese durchströmt, angetrieben wird. Nachteile, die sich aus einem vollständigen Stillstand der Abgasturbine ergeben könnten, können dadurch vermieden werden. Diese Nachteile können insbesondere eine Unterbrechung einer hydrodynamischen Schmierung der Abgasturbine sein, wodurch bei einer Wiederaufnahme des Betriebs der Abgasturbine kurzzeitig ein relativ großer Verschleiß auftreten kann, der sich nachteilig auf die Lebensdauer der Abgasturbine auswirken kann.

Bei der Solltemperatur kann es sich vorzugsweise um eine Anspringtemperatur der Abgasnachbehandlungskomponente handeln, ab der von einer ausreichenden Wirksamkeit der Abgasnachbehandlungskomponente hinsichtlich der für diese spezifischen Abgasnachbehandlung ausgegangen wird. Erfindungsgemäß kann demnach vorgesehen sein, das Abgas über die Bypassleitung mit dem Ziel einer möglichst schnellen Aufheizung der Abgasnachbehandlungskomponente zu führen, wenn sich die Brennkraftmaschine in einer Warmlaufbetriebsphase befindet, die dadurch gekennzeichnet ist, dass zumindest die eine Abgasnachbehandlungskomponente eine Betriebstemperatur aufweist, die unter der dazugehörigen Anspringtemperatur liegt. Die Warmlaufbetriebsphase kann sich dabei an einen Kaltstart der Brennkraftmaschine anschließen, wobei als "Kaltstart" eine Inbetriebnahme der Brennkraftmaschine, bei der zumindest die Abgasnachbehandlungskomponente eine Betriebstemperatur aufweist, die ungefähr (d.h. auch mit einer Abweichung von bis zu 10 K, 20 K oder 30 K) der Umgebungstemperatur entspricht, gilt. Vorzugsweise kann demnach im Rahmen eines erfindungsgemäßen Verfahrens vorgesehen sein, das Abgas unmittelbar im Anschluss an einen Kaltstart der Brennkraftmaschine mit dem Ziel einer möglichst schnellen Aufheizung der Abgasnachbehandlungskomponente über die Bypassleitung zu führen. Eine Warmlaufbetriebsphase muss sich jedoch nicht immer an einen Kaltstart oder an eine Inbetriebnahme der Brennkraftmaschine mit einer unterhalb der Anspringtemperatur liegenden Betriebstemperatur der Abgasnachbehandlungskomponente anschließen; vielmehr kann eine Warmlaufbetriebsphase auch damit beginnen, dass die Brennkraftmaschine und insbesondere der Verbrennungsmotor zuvor derart betrieben wurde, dass die zuvor bereits überschrittene Anspringtemperatur wieder in einem definierten Maße unterschritten wird, wie dies gegebenenfalls bei einem länger andauernden Leerlauf- oder Schubbetrieb des Verbrennungsmotors der Fall sein kann.

Bei der im Rahmen eines erfindungsgemäßen Verfahrens berücksichtigten Solltemperatur kann es sich auch um eine Regenerationstemperatur der Abgasnachbehandlungskomponente handeln, so dass ein Aufheizen der Abgasnachbehandlungskomponente, das erfindungsgemäß durch eine Durchströmung mit noch relativ heißem Abgas unterstützt wird, dazu dienen kann, die Wirksamkeit der Abgasnachbehandlungskomponente hinsichtlich der für diese spezifischen Abgasnachbehandlung, die infolge eines vorausgegangenen Betriebs der Brennkraftmaschine abgenommen hat, durch eine thermische Regeneration wieder zu erhöhen.

Zur Erzielung eines möglichst vorteilhaften Schadstoffemissionsverhalten einer erfindungsgemäß betriebenen Brennkraftmaschine kann vorzugsweise vorgesehen sein, dass dann, wenn die Bypassleitung freigegeben wird, um der Abgasnachbehandlungskomponente möglichst heißes Abgas zuzuführen, und wenn der Frischgasverdichter mittels des Elektromotors angetrieben wird, um eine ausreichende Verdichtung von Frischgas für den Betrieb des Verbrennungsmotors bereitzustellen, zumindest zeitweise Abgas aus dem Abgasstrang abgezweigt und über einen den Abgasstrang mit dem Frischgasstrang verbindende Abgasrückführleitung in den Frischgasstrang eingeleitet wird. Eine solche Abgasrückführung kann sich insbesondere vorteilhaft hinsichtlich der Stickoxidrohemissionen des Verbrennungsmotors auswirken.

Weiterhin bevorzugt kann dann vorgesehen sein, dass das Abgas zur Realisierung einer sogenannten Niederdruckabgasrückführung stromab (bezüglich der Strömungsrichtung von Abgas ausgehend von dem Verbrennungsmotor) der Abgasturbine aus dem Abgasstrang abgezweigt und stromauf (bezüglich der Strömungsrichtung von Frischgas in Richtung des Verbrennungsmotors) des Frischgasverdichters in den Frischgasstrang eingeleitet wird. Alternativ dazu ist jedoch auch eine sogenannte Hochdruckabgasrückführung umsetzbar, bei der das Abgas stromauf der Abgasturbine aus dem Abgasstrang abgezweigt und stromab des Frischgasverdichters in den Frischgasstrang eingeleitet wird. In diesem Fall müssten jedoch gegebenenfalls Maßnahmen vorgesehen sein, die verhindern, das Frischgas über die (Hochdruck-)Abgasrückführleitung aus dem Frischgasstrang in den Abgasstrang überströmt, wenn im Rahmen eines erfindungsgemäßen Betriebs der Brennkraftmaschine der Frischgasverdichter elektromotorisch angetrieben wird, so dass ein entsprechend hoher Ladedruck im Bereich einer Mündung der Abgasrückführleitung in den Frischgasstrang vorliegt, während im Bereich einer Abzweigung der Abgasrückführleitung aus dem Abgasstrang infolge der Freigabe der Bypassleitung ein relativ geringer Abgasdruck (und demnach ein Druckgefälle über der Abgasrückführleitung von dem Frischgasstrang zu dem Abgasstrang) vorliegt. Ein erfindungsgemäßer Betrieb einer Brennkraftmaschine mit einer solchen (Hochdruck-)Abgasrückführung kann demnach gegebenenfalls bedingen, dass die Abgasrückführleitung bei dem Vorliegen eines solchen Druckgefälles über der Abgasrückführleitung mittels eines in diese integrierten Ventils temporär verschlossen wird.

Bei dem Verbrennungsmotor einer erfindungsgemäß betriebenen Brennkraftmaschine kann es sich vorzugsweise um einen (selbstzündenden und qualitätsgeregelten) Dieselmotor oder um einen (fremdgezündeten und quantitätsgeregelten) Ottomotor oder um eine Kombination daraus, d.h. z.B. um einen Verbrennungsmotor mit homogener Kompressionszündung, handeln. Der Verbrennungsmotor kann dabei sowohl mit Flüssigkraftstoff (d.h. Diesel oder Benzin) als auch mit einem gasförmigen Kraftstoff (insbesondere Erdgas, LNG oder LPG) betrieben werden.

Die Erfindung betrifft auch ein Kraftfahrzeug, insbesondere ein radbasiertes und nicht schienengebundenes Kraftfahrzeug (vorzugsweise ein PKW oder ein LKW), mit einer erfindungsgemäß betriebenen Brennkraftmaschine beziehungsweise den Betrieb eines solchen Kraftfahrzeugs. Dabei kann der Verbrennungsmotor der Brennkraftmaschine insbesondere zur (direkten oder indirekten) Bereitstellung der Fahrantriebsleistung für das Kraftfahrzeug vorgesehen sein.

Die Erfindung wird nachfolgend anhand eines in den Zeichnungen dargestellten, von dem beanspruchten Schutzbereich nicht mehr abgedeckten Ausführungsbeispiels näher erläutert. In den Zeichnungen zeigt:
- Fig. 1:: eine Brennkraftmaschine in vereinfachter Darstellung;
- Fig. 2:: die zeitlichen Verläufe der Temperatur T₃ des Abgases stromauf einer Abgasturbine bei drei verschiedenartig betriebenen Brennkraftmaschinen während desselben Betriebszyklus;
- Fig. 3:: entsprechende Verläufe des Massenstroms ṁ_{AT} des Abgases durch die jeweilige Abgasturbine bei den drei Brennkraftmaschinen;
- Fig. 4:: entsprechende Verläufe einer Temperatur T_{AT} der jeweiligen Abgasturbine der drei Brennkraftmaschinen;
- Fig. 5:: entsprechende Verläufe der Betriebstemperatur T_{PF} eines Partikelfilters der drei Brennkraftmaschinen; und
- Fig. 6:: entsprechende Verläufe des Kraftstoffverbrauchs FC eine Verbrennungsmotors der drei Brennkraftmaschinen.

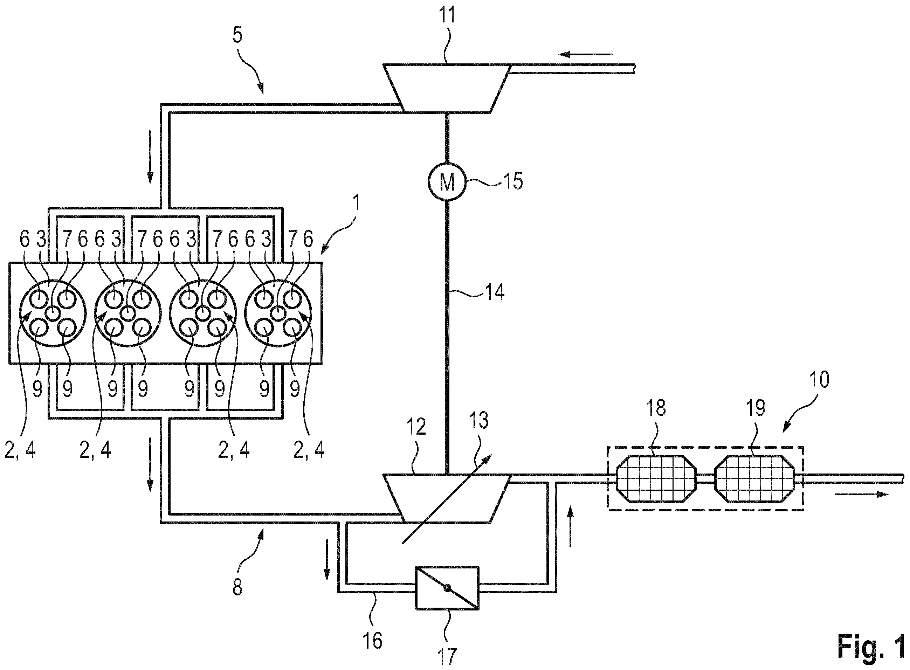

Die Fig. 1 zeigt eine Brennkraftmaschine für ein Kraftfahrzeug. Diese umfasst einen Verbrennungsmotor 1, der beispielhaft in Form eines Hubkolbenmotors mit vier in Reihe angeordneten Zylinderöffnungen 2 ausgestaltet ist. Die Zylinderöffnungen 2 begrenzen mit darin beweglich geführten Hubkolben 3 und einem Zylinderkopf (nicht dargestellt) jeweils einen Brennraum 4. Diesen Brennräumen 4 wird im Betrieb des Verbrennungsmotors 1 und damit der Brennkraftmaschine Frischgas über einen Frischgasstrang 5 zugeführt, wobei die Zufuhr des Frischgases mittels Einlassventilen 6, die den einzelnen Brennräumen 4 zugeordnet sind, gesteuert wird. Bei dem Frischgas handelt es sich ausschließlich oder hauptsächlich um Luft, die aus der Umgebung angesaugt wurde. Abgas, das bei der Verbrennung von Gemischmengen entstanden ist, die aus dem Frischgas sowie aus direkt über Kraftstoffinjektoren 7 in die Brennräume 4 eingespritztem Kraftstoff bestehen, wird über einen Abgasstrang 8 der Brennkraftmaschine abgeführt, wobei die Abfuhr des Abgases mittels Auslassventilen 9, die ebenfalls den einzelnen Brennräumen 4 zugeordnet sind, gesteuert wird. Das Abgas durchströmt dabei eine Abgasnachbehandlungseinrichtung 10, die dafür vorgesehen ist, Bestandteile des Abgases, die als Schadstoffe angesehen werden, aus dem Abgas zu entfernen oder in unschädliche Bestandteile umzuwandeln.

Ein Entzünden der Gemischmengen in den Brennräumen 4 kann mittels elektrischer Zündvorrichtungen (nicht dargestellt), die beispielsweise Zündfunken erzeugen (Zündkerzen), oder durch Selbstzündung erfolgen.

Die Brennkraftmaschine ist aufgeladen ausgestaltet, wozu in den Frischgasstrang 5 ein Frischgasverdichter 11 integriert ist. Der Frischgasverdichter 11 ist Teil eines Abgasturboladers, der weiterhin eine in den Abgasstrang 9 integrierte Abgasturbine 12 mit variabler Turbinengeometrie (VTG) 13 umfasst. Abgas, das die Abgasturbine 12 durchströmt, führt zu einem rotierenden Antrieb eines Turbinenlaufrads (nicht dargestellt), das über eine Welle 14 drehantreibend mit einem Verdichterlaufrad (nicht dargestellt) des Frischgasverdichters 11 verbunden ist, so dass im Ergebnis ein Antrieb des Frischgasverdichters 11 mittels der Abgasturbine 12 erfolgen kann. Der Abgasturbolader umfasst weiterhin einen mit der Welle 14 mechanisch gekoppelten Elektromotor 15, durch den bedarfsweise die Welle 14 und damit auch das Verdichterlaufrad des Frischgasverdichters 11 (sowie das Turbinenlaufrad der Abgasturbine 12) rotierend antreibbar ist.

Der Abgasstrang 8 umfasst weiterhin eine Bypassleitung 16 mit Bypassventil 17, die unmittelbar stromauf der Abgasturbine 12 aus einem die Abgasturbine12 integrierenden Hauptstrang des Abgasstrangs 8 abzweigt und unmittelbar stromab der Abgasturbine 12 und damit stromauf der Abgasnachbehandlungseinrichtung 10 wieder in den Hauptstrang des Abgasstrangs 8 mündet. Bei geöffnetem Bypassventil 17 wird Abgas über die Bypassleitung 16 geführt, wodurch dieses Abgas die Abgasturbine 12 umgeht beziehungsweise nicht durchströmt.

Die Abgasnachbehandlungseinrichtung 10 kann beispielsweise eine Abgasnachbehandlungskomponente in Form eines Oxidationskatalysators 18 sowie, stromab des Oxidationskatalysators 18, eine Abgasnachbehandlungskomponente in Form eines Partikelfilters 19 umfassen.

Sofern zumindest eine dieser Abgasnachbehandlungskomponenten im Betrieb des Verbrennungsmotors 1 eine Betriebstemperatur aufweist, die unterhalb einer definierten Solltemperatur liegt, ist erfindungsgemäß vorgesehen, zumindest temporär die Bypassleitung 16 durch ein zumindest teilweises und vorzugsweise vollständiges Öffnen des Bypassventils 17 freizugeben sowie die VTG 13 in eine 100% beziehungsweise weitestmöglich geschlossene Stellung zu stellen. Dadurch kann erreicht werden, dass möglichst das gesamte von dem Verbrennungsmotor 1 kommende Abgas über die Bypassleitung 16 geführt wird und dadurch die Abgasturbine 12 umgeht. Auf diese Weise kann vermieden werden, dass das Abgas infolge einer Durchströmung der Abgasturbine 12 weitgehend abgekühlt wird, was einerseits auf eine Entspannung durch die Abgasturbine 12 und andererseits auf einen Übergang von Wärmeenergie zum Erwärmen der ebenfalls noch relativ kalten Abgasturbine 12, die eine relativ große thermische Masse aufweist, zurückzuführen wäre. Im Gegensatz dazu weist die Bypassleitung 16 eine relativ kleine thermische Masse auf, so dass ein Durchströmen der Bypassleitung 16 zu einer nur relativ geringen Abkühlung des Abgases führt. Das Abgas gelangt demnach mit einer relativ hohen Temperatur in die Abgasnachbehandlungseinrichtung 10 und kann dadurch zu einer möglichst schnellen Aufheizung der Abgasnachbehandlungseinrichtung 10 beziehungsweise der von dieser umfassten Abgasnachbehandlungskomponenten bis zumindest zum Erreichen der jeweiligen Solltemperatur führen.

Da die Abgasturbine 12 aufgrund der Umgehung mittels des Abgases kein oder kaum Antriebsleistung für den Frischgasverdichter 11 erzeugt, wird während dieses Betriebs der Brennkraftmaschine der Frischgasverdichter (und aufgrund der mechanischen Kopplung mit der Abgasturbine 12 auch die Abgasturbine 12) in Abhängigkeit von dem Bedarf des Verbrennungsmotors 1 an Frischgas mittels des Elektromotors 15 angetrieben. Dadurch kann vermieden werden, dass die Umgehung der Abgasturbine 12 hinsichtlich des Abgasstroms zu Nachteilen im Betriebsverhalten und insbesondere auch hinsichtlich der Leistungsabgabe des Verbrennungsmotors 1 führt.

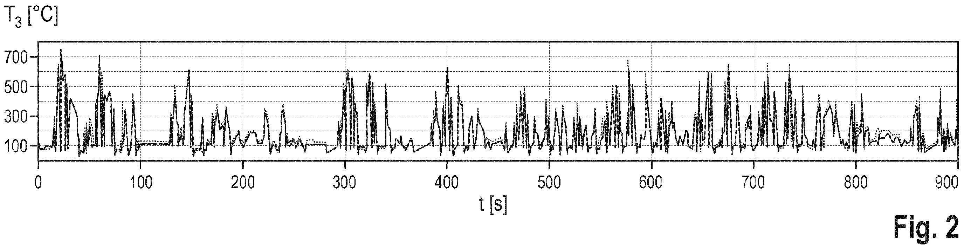

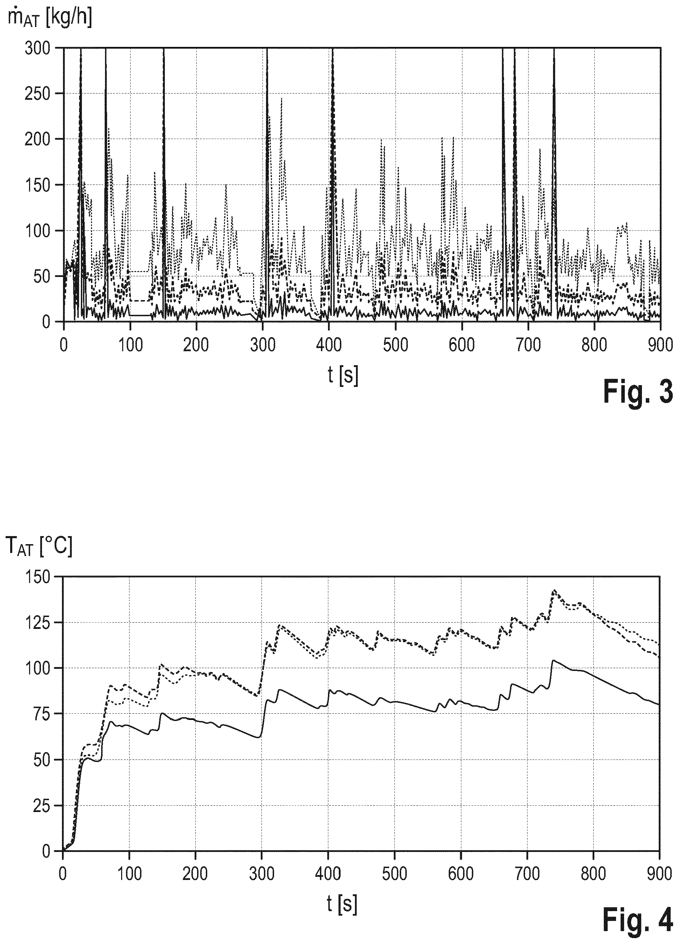

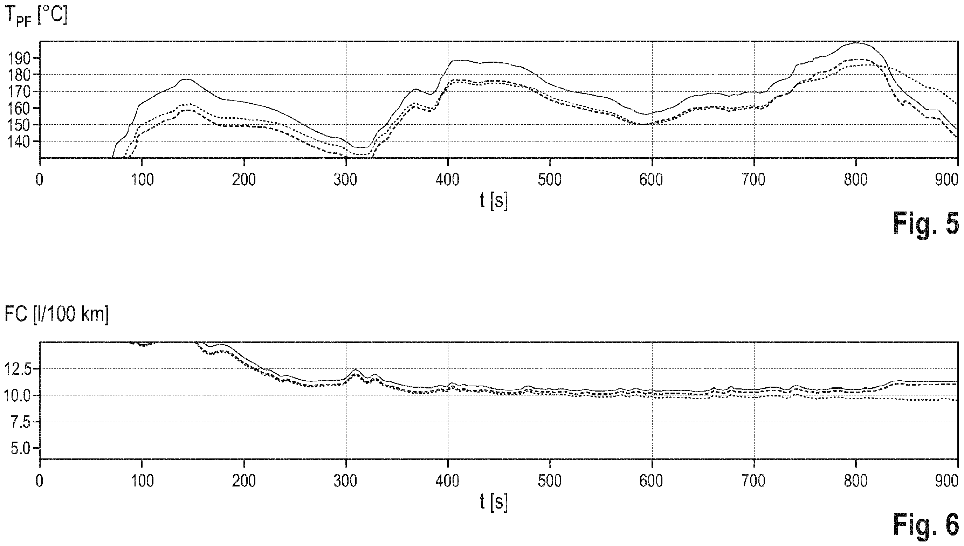

Die Fig. 2 bis 6 verdeutlichen dieses erfindungsgemäßen Vorgehen und die dabei erzielbaren Vorteile anhand von zeitlichen Verläufen bezüglich der Temperatur T₃ des Abgases stromauf der Abgasturbine 12 (vgl. Fig. 2), bezüglich des Massenstroms ṁ_{AT} des Abgases durch die Abgasturbine 12 (vgl. Fig. 3), bezüglich einer Temperatur T_{AT} der Abgasturbine 12 (vgl. Fig. 4), bezüglich der Betriebstemperatur T_{PF} des Partikelfilters 19 (vgl. Fig. 5) und bezüglich des auf eine Fahrleistung eines die Brennkraftmaschine umfassenden Kraftfahrzeugs bezogenen Kraftstoffverbrauchs FC des Verbrennungsmotors 1 (vgl. Fig. 4), jeweils während eines Betriebszyklus der Brennkraftmaschine in einer Warmlaufbetriebsphase, die sich unmittelbar an einen Kaltstart der Brennkraftmaschine bei t = 0 anschließt.

Dabei sind diese Verläufe jeweils mit durgezogener Linienführung für einen erfindungsgemäßen Betrieb einer Brennkraftmaschine gemäß beispielsweise der Fig. 1 dargestellt, d.h. während des Betriebs wird kontinuierlich Abgas über die Bypassleitung 16 geführt. Weiterhin wird der Frischgasverdichter 11 bedarfsweise und bedarfsgerecht mittels des Elektromotors 15 angetriebenen und die VTG 13 ist in eine zu 95% geschlossene Stellung gestellt.

Mit gestrichelter Linienführung sind dagegen die Verläufe hinsichtlich des Betriebs derselben Brennkraftmaschine dargestellt, bei der das Abgas ebenfalls über die Bypassleitung 16 geführt und der Frischgasverdichter 11 bedarfsweise und bedarfsgerecht mittels des Elektromotors 15 angetrieben wird, bei der jedoch die VTG 13 in eine vollständig geöffnete beziehungsweise zu 0% geschlossene Stellung gestellt ist.

Und mit gepunkteter Linienführung sind die Verläufe hinsichtlich des Betriebs einer Brennkraftmaschine gezeigt, bei der dem Abgasturbolader kein Elektromotor 15 zugeordnet ist und bei der die für den Betrieb des Verbrennungsmotors 1 gemäß dem Betriebszyklus erforderliche Verdichtung mittels des Frischgasverdichters ausschließlich unter Nutzung von Antriebsleistung erfolgt, die mittels der Abgasturbine 12 bereitgestellt wird, wobei die VTG 13 Abgasturbine 12 in Abhängigkeit von dem Bedarf des Frischgasverdichters 11 an Antriebsleistung verstellt wird. Dabei wird stets das gesamte Abgas über die Abgasturbine 12 geführt. Im Übrigen entspricht diese Brennkraftmaschine der anderen Brennkraftmaschine.

Der Betriebszyklus erstreckt sich über einen Zeitraum von 900 Sekunden und ist durch einen variablen Betrieb des Verbrennungsmotors 1 gekennzeichnet, der sich gemäß der Fig. 2 in einer stark schwankenden Temperatur T₃ des Abgases stromauf der Abgasturbine 12 auswirkt. Die Verläufe der Abgastemperatur T₃ für die verschiedenen Brennkraftmaschinen beziehungsweise die verschiedenen Betriebsweisen die Brennkraftmaschinen sind dabei im Wesentlichen deckungsgleich.

Gemäß der Fig. 3 führen die unterschiedlichen Betriebsweisen jedoch zu deutlich unterschiedlichen Massenströmen des Abgases durch die Abgasturbine 12. Erkennbar ist, dass der Massenstrom des Abgases durch die erfindungsgemäß betriebene Brennkraftmaschine nochmals deutlich im Vergleich zu derjenigen, bei der die Bypassleitung 16 freigegeben jedoch gleichzeitig auch die VTG 13 geöffnet ist, reduziert ist. Dies führt dazu, dass sich die Abgasturbine 12 der erfindungsgemäß betriebenen Brennkraftmaschine im Verlauf des Betriebszyklus deutlich langsamer und auch in einem geringeren Maße erwärmt (vgl. Fig. 4), während die Betriebstemperatur T_{PF} des Partikelfilters 19 dieser Brennkraftmaschine deutlich schneller und auch auf höhere Werte steigt (vgl. Fig. 5). Demnach kann durch den erfindungsgemäßen Betrieb der Brennkraftmaschine ein deutlich schnelleres Aufheizen des Partikelfilters 19 beziehungsweise der gesamten Abgasnachbehandlungseinrichtung 10 realisiert werden. Ein Nachteil kann dabei gegebenenfalls in einem geringfügig höheren Kraftstoffverbrauch des Verbrennungsmotors 1 liegen, der darin begründet sein kann, dass die elektrische Leistung, die für den Betrieb des den Frischgasverdichter 11 antreibenden Elektromotors 15 erforderlich ist, im Wesentlichen mittels einer mit dem Verbrennungsmotor 1 mechanisch gekoppelten, generatorisch betriebenen Elektromaschine (in der Fig. 1 nicht gezeigt) erzeugt werden muss, was zu einer höheren Last im Betrieb des Verbrennungsmotors 1 führen kann. Bei der Brennkraftmaschine, bei der das Abgas ebenfalls (teilweise) über die Bypassleitung 16 geführt wird, bei der jedoch die VTG 13 geöffnet gehalten ist, strömt dagegen ein höherer Anteil des Abgases durch die Abgasturbine (vgl. Fig. 3), wodurch diese infolge der mechanischen Kopplung mit dem Frischgasverdichter 11 einen Teil des Bedarfs an Antriebsleistung für den Frischgasverdichter 11 deckt, so dass entsprechend weniger Antriebsleistung von dem Elektromotor 15 bereitgestellt werden muss.

### Bezugszeichenliste

- 1: Verbrennungsmotor
- 2: Zylinderöffnung
- 3: Hubkolben
- 4: Brennraum
- 5: Frischgasstrang
- 6: Einlassventil
- 7: Kraftstoffinjektor
- 8: Abgasstrang
- 9: Auslassventil
- 10: Abgasnachbehandlungseinrichtung
- 11: Frischgasverdichter
- 12: Abgasturbine
- 13: VTG
- 14: Welle
- 15: Elektromotor
- 16: Bypassleitung
- 17: Bypassventil
- 18: Oxidationskatalysator
- 19: Partikelfilter

- T₃: zeitlicher Verlauf der Temperatur des Abgases stromauf der Abgasturbine während eines Betriebszyklus einer Brennkraftmaschine
- ṁ_{AT}: zeitlicher Verlauf des Massenstroms des Abgases durch die Abgasturbine während des Betriebszyklus der Brennkraftmaschine
- T_{AT}: zeitlicher Verlauf einer Temperatur der Abgasturbine während des Betriebszyklus der Brennkraftmaschine
- T_{PF}: zeitlicher Verlauf der Betriebstemperatur des Partikelfilters während des Betriebszyklus der Brennkraftmaschine
- FC: zeitlicher Verlauf des Kraftstoffverbrauchs des Verbrennungsmotors während des Betriebszyklus der Brennkraftmaschine

## Patentansprüche

1. Verfahren zum Betreiben einer Brennkraftmaschine, die
• einen Verbrennungsmotor (1),
• einen Frischgasstrang (5), in den ein Frischgasverdichter (11) integriert ist, wobei der Frischgasverdichter (11) mittels eines Elektromotors (15) antreibbar ist, und
• einen Abgasstrang (8), in den eine Abgasturbine (12), die eine variable Turbinengeometrie (VTG) (13) aufweist, eine Bypassleitung (16) mit Bypassventil (17) zur bedarfsweisen Umgehung der Abgasturbine (12), sowie, stromab der Abgasturbine (12) und der Bypassleitung (16), eine Abgasnachbehandlungskomponente integriert sind,
umfasst, wobei dann, wenn im Betrieb des Verbrennungsmotors (1) eine Betriebstemperatur der Abgasnachbehandlungskomponente unterhalb einer Solltemperatur liegt, zumindest zeitweise die Bypassleitung (16) freigegeben, der Frischgasverdichter (11) mittels des Elektromotors (15) angetrieben und die VTG (13) in eine zu mindestens 50% oder mindestens 80% oder mindestens 90% geschlossene Stellung gestellt wird, **dadurch gekennzeichnet, dass** der Frischgasverdichter (11) und die Abgasturbine (12) mechanisch entkoppelt sind und die VTG (13) in eine kleiner als 100% geschlossene Stellung gestellt wird.

2. Verfahren gemäß Anspruch 1, **dadurch gekennzeichnet, dass** die Solltemperatur eine Anspringtemperatur der Abgasnachbehandlungskomponente ist.

3. Verfahren gemäß Anspruch 1, **dadurch gekennzeichnet, dass** die Solltemperatur eine Regenerationstemperatur der Abgasnachbehandlungskomponente ist.

4. Verfahren gemäß einem der vorhergehenden Ansprüche, **dadurch gekennzeichnet, dass** unmittelbar nach einem Kaltstart der Brennkraftmaschine der Frischgasverdichter (11) mittels des Elektromotors (15) angetrieben und die VTG (13) in die zu mindestens 50% oder mindestens 80% oder mindestens 90% geschlossene Stellung gestellt wird.

5. Verfahren gemäß einem der vorhergehenden Ansprüche, **dadurch gekennzeichnet, dass** dann, wenn die Bypassleitung (16) freigegeben, der Frischgasverdichter (11) mittels des Elektromotors (15) angetrieben und die VTG (13) in die zu mindestens 50% oder mindestens 80% oder mindestens 90% oder 100% geschlossene Stellung gestellt wird, zumindest zweitweise Abgas aus dem Abgasstrang (8) abgezweigt und in den Frischgasstrang (5) eingeleitet wird.

6. Verfahren gemäß Anspruch 5, **dadurch gekennzeichnet, dass** das Abgas stromab der Abgasturbine (12) aus dem Abgasstrang (8) abgezweigt und stromauf des Frischgasverdichters (11) in den Frischgasstrang (5) eingeleitet wird.

## Claims

1. Method for operating an internal combustion machine, which comprises
• an internal combustion engine (1),
• a fresh gas line (5) in which a fresh gas compressor (11) is integrated, the fresh gas compressor (11) being drivable by means of an electric motor (15), and
• an exhaust gas line (8) in which an exhaust gas turbine (12) having a variable turbine geometry (VTG) (13), a bypass line (16) having a bypass valve (17) for bypassing the exhaust gas turbine (12) as required, and, downstream of the exhaust gas turbine (12) and the bypass line (16), an exhaust gas aftertreatment component are integrated,
in which, when an operating temperature of the exhaust gas aftertreatment component is below a set temperature during operation of the internal combustion engine (1), the bypass line (16) is at least temporarily released, the fresh gas compressor (11) is driven by means of the electric motor (15) and the VTG (13) is set to a position which is at least 50% or at least 80% or at least 90% closed, **characterized in that** the fresh gas compressor (11) and the exhaust gas turbine (12) are mechanically decoupled and the VTG (13) is set to a position which is less than 100% closed.

2. Method according to claim 1, **characterized in that** the set temperature is a starting temperature of the exhaust gas aftertreatment component.

3. Method according to claim 1, **characterized in that** the set temperature is a regeneration temperature of the exhaust gas aftertreatment component.

4. Method according to any of the preceding claims, **characterized in that,** immediately after a cold start of the internal combustion machine, the fresh gas compressor (11) is driven by means of the electric motor (15) and the VTG (13) is set to the at least 50% or at least 80% or at least 90% closed position.

5. Method according to any of the preceding claims, **characterized in that,** when the bypass line (16) is released, the fresh gas compressor (11) is driven by means of the electric motor (15) and the VTG (13) is set to the at least 50% or at least 80% or at least 90% or 100% closed position, and exhaust gas is at least temporarily branched off from the exhaust gas line (8) and introduced into the fresh gas line (5).

6. Method according to claim 5, **characterized in that** the exhaust gas is branched off from the exhaust gas line (8) downstream of the exhaust gas turbine (12) and introduced into the fresh gas line (5) upstream of the fresh gas compressor (11).

## Revendications

1. Procédé permettant de faire fonctionner un moteur à combustion interne qui comprend
• un moteur thermique (1),
• un circuit de gaz frais (5) dans lequel est intégré un compresseur de gaz frais (11), dans lequel le compresseur de gaz frais (11) peut être entraîné au moyen d'un moteur électrique (15), et
• un circuit de gaz d'échappement (8) dans lequel sont intégrés une turbine à gaz d'échappement (12) qui présente un turbo à géométrie variable (TGV) (13), une conduite de dérivation (16) comportant une soupape de dérivation (17) pour l'éventuel contournement de la turbine à gaz d'échappement (12), ainsi que, en aval de la turbine à gaz d'échappement (12) et de la conduite de dérivation (16), un composant de post-traitement des gaz d'échappement,
dans lequel, lorsque, pendant le fonctionnement du moteur thermique (1), une température de fonctionnement du composant de post-traitement des gaz d'échappement est inférieure à une température de consigne, la conduite de dérivation (16) est libérée au moins temporairement, le compresseur de gaz frais (11) est entraîné au moyen du moteur électrique (15) et le TGV (13) est placé dans une position fermée à au moins 50 % ou à au moins 80 % ou à au moins 90 %, **caractérisé en ce que** le compresseur de gaz frais (11) et la turbine à gaz d'échappement (12) sont désaccouplés mécaniquement et le TGV (13) est placé dans une position fermée à moins de 100 %.

2. Procédé selon la revendication 1, **caractérisé en ce que** la température de consigne est une température de démarrage du composant de post-traitement des gaz d'échappement.

3. Procédé selon la revendication 1, **caractérisé en ce que** la température de consigne est une température de régénération du composant de post-traitement des gaz d'échappement.

4. Procédé selon l'une des revendications précédentes,
**caractérisé en ce que,** immédiatement après un démarrage à froid du moteur à combustion interne, le compresseur de gaz frais (11) est entraîné au moyen du moteur électrique (15) et le TGV (13) est placé dans la position fermée à au moins 50 % ou à au moins 80 % ou à au moins 90 %.

5. Procédé selon l'une des revendications précédentes,
**caractérisé en ce que,** lorsque la conduite de dérivation (16) est libérée, que le compresseur de gaz frais (11) est entraîné au moyen du moteur électrique (15) et que le TGV (13) est placé dans la position fermée à au moins 50 % ou à au moins 80 % ou à au moins 90 % ou à 100 %, les gaz d'échappement sont au moins temporairement dérivés du circuit de gaz d'échappement (8) et sont introduits dans le circuit de gaz frais (5).

6. Procédé selon la revendication 5, **caractérisé en ce que** les gaz d'échappement sont dérivés du circuit de gaz d'échappement (8) en aval de la turbine à gaz d'échappement (12) et sont introduits dans le circuit de gaz frais (5) en amont du compresseur de gaz frais (11).
